# EUROPEAN PATENT SPECIFICATION

(11) **EP 1 250 839 B1**
(45) Date of publication and mention of the grant of the patent: **31.08.2005**
(21) Application number: 02076476.7
(22) Date of filing: 16.04.2002
(51) Int. Cl.: A01K 5/02

(54) **A device for supplying feed to animals**
Einrichtung zum Zuführen von Nahrungsmittel für Tiere
Dispositif pour la distribution de nourriture aux animaux

(30) Priority: 20.04.2001 NL 1017885
(43) Date of publication of application: 23.10.2002
(73) Proprietor: Lely Enterprises AG, 6300 ZUG (CH)
(72) Inventor: van den Berg, Karel, 2971 BR Bleskengraaf (NL); Sie, Howard, 3037 VC Rotterdam (NL); Voogd, Lucien Eliza Niels, 4143 HG Leerdam (NL); van der Lely, Alexander, 3065 NA Rotterdam (NL)
(74) Representative: Corten, Maurice Jean F.M.

(56) References cited:
- WO-A-00/38504
- WO-A-01/17340
- DE-C- 927 302
- FR-A- 2 513 073
- FR-A- 2 686 218
- NL-C- 1 010 898
- US-A- 3 336 907
- "Search for a sow trough" PIG INTERNATIONAL, vol. 18, no. 1, 1988, XP002184293 Mount Morris, Illinois, USA

## Description

The invention relates to a device for supplying feed to animals, such as cows, according to the preamble of claim 1.

Such a device, that functions satisfactorily, is known from Dutch patent application 1010898.

It is an object of the invention to provide a device for supplying feed to animals, such as cows, by means of which an improved eating behaviour of the animals is realised.

According to the invention, for that purpose a device of the above-described type comprises the measures according to the characterizing part of claim 1. A feeding trough having a shape that widens from the entrance side appears to have unexpected advantages in relation to the feed intake of animals. In this situation the degree of widening is in particular such that the front side of the head of an animal, e.g. a cow, has relatively much lateral freedom. This widening shape seems illogical, in particular when several feeding troughs are disposed around a central axis and all feeding troughs have a shape that widens from the entrance side, because the space available for feeding troughs on the contrary decreases towards the axis. However, this shape appears to offer enormous, unexpected advantages in relation to the feed intake of animals.

A feeding trough having a shape that widens from the entrance is known per se, e.g. from FR-A-2,523,073.

An embodiment of a device according to the invention is characterized in that a first number of the feeding troughs are disposed on the framework in a lower position than a second number of the feeding troughs. When a first number of the feeding troughs are disposed on the framework in a lower position than a second number of the feeding troughs, a large number of feeding troughs may be provided within a limited space when in a projective view there is an overlap between the feeding troughs of the first and the second number.

In a preferred embodiment of a device according to the invention, in which the device comprises a bottom, a feeding trough is mounted so as to be adjustable in height relative to the bottom. This makes it possible for animals of different heights to get access to a feeding trough in a simple manner.

The device is preferably provided with identification means for identifying an individual animal, so that the device can function automatically. Especially the height of the feeding trough is automatically adjustable with the aid of data from the identification means.

To prevent an animal from being disturbed by another animal during eating from a feeding trough, there is disposed a partition between two adjacent feeding troughs.

Because animals come in the immediate vicinity of the partition, it is highly appropriate when a reading device for a step counter is disposed in the partition. Such step counters are used inter alia for measuring on the basis of the number of steps whether or not an animal is on heat.

To prevent animals standing side by side from leaning too much against each other, an embodiment of a device according to the invention is provided with at least one partition frame extending from a feeding trough over a distance that equals at least approximately half of the average length of an animal. The partition frame is preferably made of stainless steel.

In an embodiment of a device according to the invention, the device is provided with an animal height measuring means for measuring the height of an animal. Such an animal height measuring means may be constituted by a camera or a light grid, in which situation the measuring means are disposed e.g. in the partition. Thus it is possible to establish inter alia the growth of an animal. When an animal is grown up and does not grow any more, the animal recognition device (or identification device) may be used to find out the height of an animal. For that purpose a memory comprises a table containing the height per animal. The height of the feeding trough is preferably adjusted with the aid of data from the animal height measuring means. In order to obtain alternative or additional data about the growth and/or health of an animal, the device is provided with a measuring means for weighing an animal, a so-called animal weighing means. The animal weighing means is preferably integrated into the floor portion. For that purpose a weighing floor known per se may be used.

The device is preferably provided with a hopper for containing a stock of feed, and with conveying means for conveying feed from the hopper to the feeding trough, the device being adapted to be positioned relative to a bottom on which an animal can stand.

When the first conveyor conveys the feed upwards, there appears to be obtained a highly accurate metering as well as a quick supply of the feed.

Although the feed may be conveyed directly from the first conveyor to the feeding trough, it is advantageous, inter alia for reasons of mixing feed, when the device is provided with a receptacle, the first conveyor conveying an amount of feed from the hopper to the receptacle.

An embodiment of a device according to the invention is characterized in that the receptacle is provided with a weighing device for measuring feed present in the receptacle. Thus it is possible to establish the amount of feed that can be supplied to the feeding trough. Thus it is also possible to realise an accurate composition of the mixture.

Although the feed may be taken out of the receptacle by means of a separate taking-out device, for the sake of simplicity of the construction it is advantageous when there is not used a separate device for taking out. There may be used a tiltable receptacle, feed falling from said receptacle after the latter has been tilted. However, for improving the hygienic use of the device, the receptacle has preferably a bottom which is adapted to be opened.

Although the amount of feed may be conveyed directly from the receptacle to the feeding trough, it is constructionally advantageous when the conveying means comprise a second conveyor for conveying the amount of feed from the receptacle to the feeding trough.

In a preferred embodiment the second conveyor is constituted by a tube-shaped chute respectively a channel-shaped chute, in other words, the receptacle is located above the feeding trough. As a result thereof, there is no separate drive mechanism required for conveying the feed, because the gravitational force causes the feed to flow to the feeding trough.

A device according to the invention may be applied inter alia to milking robots. However, the invention is in particular advantageous when the device is constituted by a feeding column, in which situation several animals can make use of the device at the same time.

For the purpose of obtaining a compact device each hopper has a discharge end, a discharge end corresponding with the relevant supply end of the first conveyor. A particularly compact construction is obtained when the discharge ends of the hoppers alternately stagger in height, the arrangement being such that the discharge ends of juxtaposed hoppers partially overlap each other in a projective view.

The conveyance of feed to the first number of feeding troughs is simplified when above at least one of the feeding troughs of the first number there is provided a third conveyor for conveying feed from the second conveyor to the feeding trough.

The third conveyor is preferably disposed so as to be rotatable around the central axis, so that a small number of third conveyors, preferably one, will suffice.

The second conveyor is preferably disposed so as to be rotatable around the central axis, so that a small number of second conveyors, preferably one, will suffice.

In a preferred embodiment the third conveyor is constituted by a tube-shaped chute respectively a channel-shaped chute, in other words the receptacle is located above the feeding trough. As a result thereof there is no separate drive mechanism required for conveying the feed, the gravitational force causing the feed to flow to the feeding trough.

For feeding animals by means of the device, an animal is identified, after which, with the aid of a feed metering device, the feed is composed from ingredients originating from one or more hoppers according to the nutritive need of the individual animal, and the feed is supplied to the feeding trough via the receptacle and the conveying means. By means of the weighing device the amount of feed can be attuned to the nutritive need of the individual animal. In this situation a control means preferably controls the functioning of the relevant components of the device.

When the device is used for dairy animals it is advantageous when the device is provided with means for giving the animal a signal indicating that the animal is expected at a milk box. After a certain period of training this signal results in that a dairy animal goes to a milk box of its own will. This may be promoted by closing the feeding trough and by offering the animal only feed in the milk box.

To prevent excrement from flowing in a direction towards the device, it is advantageous when the bottom slopes downwards in a direction away from the device. This appears also to give the animals a pleasant sensation. Additionally or alternatively the bottom has a raised floor portion on which the animal can stand.

An embodiment of a device according to the invention, said device being provided with a feed metering device, said feed metering device supplying feed in metered portions with the aid of data from an animal identification device and feeding data stored in a computer, is characterized in that the animal weighing means respectively the animal height measuring means comprises a data conveying means for conveying measurement data to the computer, and in that the computer is provided with a memory containing average growth data for the relevant animal species, preferably in the form of correspondence tables, in relation to weight in dependence of age, and/or in relation to height in dependence of age, and/or in relation to the amount of feed per day per animal in dependence of age, and/or historical growth data of an animal, the feed metering device supplying feed in metered portions with the aid of at least one of said data. In this manner the amount of feed can be adapted during the growth of the animal on the basis of measured and historical data, in particular after comparison with the average growth data of the animal species.

Although the feeding trough may be mounted on the device so as to be adjustable in height, it is also possible to make the floor portion adjustable in height.

The invention also relates to an assembly of a device according to the invention and a bottom having a floor portion on which an animal can stand for making use of the device, characterized in that the floor portion is provided with means for adjusting the orientation of the floor portion relative to the bottom, and means for locking the floor portion in an adjusted position.

The assembly is preferably provided with identification means for identifying an individual animal, the adjusting means being controlled with the aid of data from the identification means. To ensure that an animal stands less often in excrement during eating, the assembly has a bottom having a floor portion on which an animal can stand for making use of the device, the floor portion being located above the bottom. Alternatively or additionally the floor portion slopes obliquely downwards away from the device.

The invention will now be explained in further detail with reference to an embodiment shown in the drawing.
Figure 1 is a partially cut-away, schematic front view of an embodiment of a device according to the invention,
Figure 2 is a side view of the embodiment shown in Figure 1,
Figure 3 is a schematic side view of a receptacle with weighing device suitable for use in a device according to the invention, and
Figure 4 is a plan view of feeding troughs suitable for use in a device according to the invention.

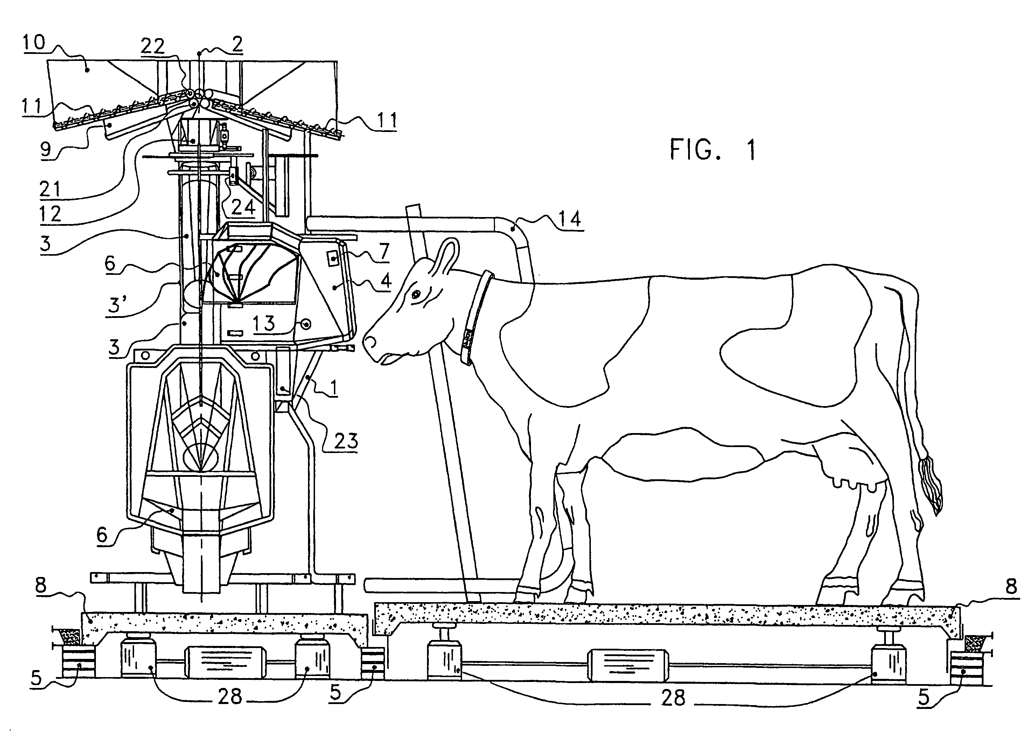

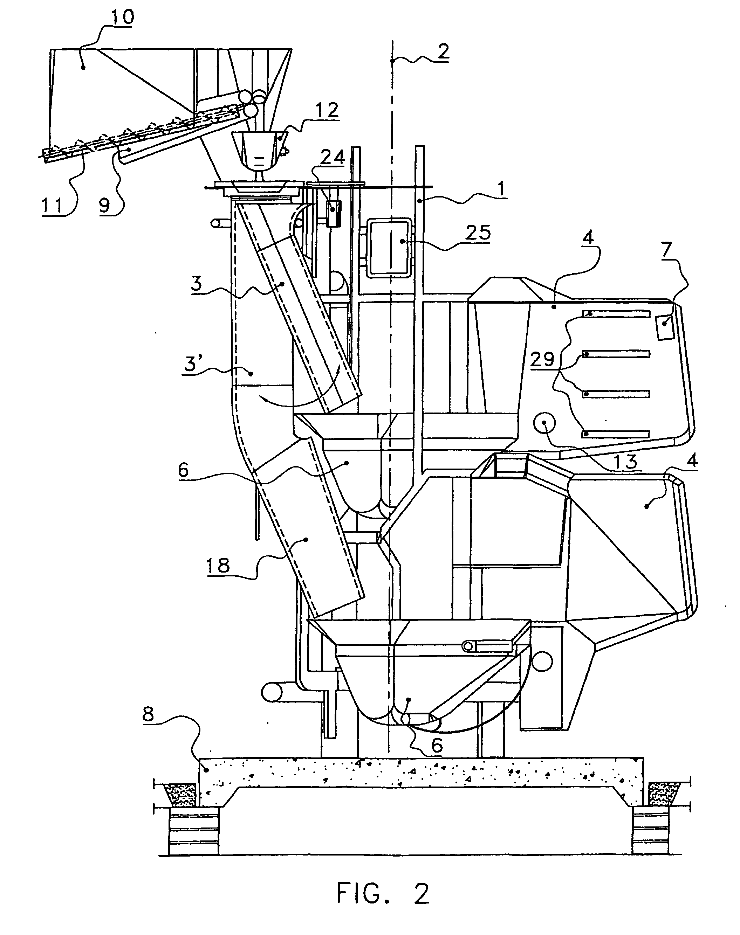

Figure 1 shows schematically a device for supplying feed to animals, in particular but not exclusively cows. The device comprises a framework 1 which, in the embodiment depicted in Figures 1 and 2, is disposed around a central axis 2 and has a substantially circular circumference. At the upper side of the framework 1 there are located hoppers 9, 10. For the installation of the hoppers 9, 10 there are made not further shown provisions on the framework 1. The device is adapted to be placed in a position, in other words can be positioned, on a bottom 5, preferably having a floor portion 8, on which an animal can stand.

The framework 1 is preferably provided with partitions 4 between adjacent feeding troughs 6. The partitions 4 are possibly detachably disposed on the framework 1. The partitions prevent an animal from being disturbed by another animal during eating from a feeding trough. Because cows eating from a feeding trough 6 come in the immediate vicinity of the partition 4, there is provided a reading device 13 in the partition 4 for reading the data in a step counter fitted to the cows. Such step counters are used inter alia for measuring whether or not an animal is on heat on the basis of the number of steps.

Partition frames 14 (one of which is shown in Figure 1) extend from the feeding trough over a distance that equals at least approximately half of the average length of a cow. The partition frame is preferably made of stainless steel, although other materials such as synthetic material may be applied as well. The partition frames 14 prevent animals standing side by side from leaning too much against each other.

In the embodiment shown feeding troughs 6 for the animals are disposed in circular arrangement around the axis 2 in the lower part of the device. By means of the geometry of the device, in the embodiment shown constituted by a feeding column, it is achieved that the construction occupies little space, while the accessibility of the feeding column to the animals is optimal from all directions. For the sake of compactness a first number of the feeding troughs 6 are disposed on the framework in a lower position than a second number of the feeding troughs 6. As is apparent from Figure 1, the feeding troughs of the first number overlap the feeding troughs of the second number in a projective view.

The feeding column is further provided with conveying means comprising a first conveyor 11 and a second conveyor 3, 3' for conveying feed from the hopper 9 respectively 10 to the relevant feeding trough 6. A receptacle 12 receives an amount of feed which is conveyed by the first conveyor 11 from the hopper 9, 10 to the receptacle 12. As a first conveyor 11, an auger, gripper, belt conveyor or any other device known per se for conveying feed may be used. The first conveyors 11 convey feed from a hopper 9, 10 upwards for obtaining a highly accurate metering. The first conveyors 11 have supply ends corresponding with the discharge ends 21 respectively 22 of the hoppers 9 respectively 10. In the embodiment shown the hoppers 9, 10 are disposed around the central axis 2. The discharge ends 21 and 22 of the hoppers 9, 10 alternately stagger in height, the arrangement being such that the discharge ends of juxtaposed hoppers 9, 10 partially overlap each other in a projective view, as is apparent from Figure 1.

A second conveyor 3, 3', preferably constituted by a tube-shaped chute respectively a channel-shaped chute, is suitable for conveying the amount of feed from the receptacle 12 to the relevant feeding trough 6. Above the feeding troughs 6 of the first number, so the lower feeding troughs 6, there is provided a third conveyor 18, preferably constituted by a tube-shaped chute respectively a channel-shaped chute, for conveying feed from the second conveyor 3, 3' to the feeding trough 6. Although there may be provided a separate third conveyor 18 per feeding trough 6 of the first number, the third conveyor 18 is preferably disposed so as to be rotatable around the central axis 2. The rotation is effected by a drive member 23, e.g. constituted by an electric motor.

In an analogous manner the second conveyor 3, 3' is disposed so as to be rotatable around the central axis 2; this rotation may be driven by a motor 24. Moreover, the second conveyor 3, 3' is movable from a position in which the feeding troughs of the second number can be filled to a position in which the feeding troughs of the first number can be filled, as is apparent from Figure 2.

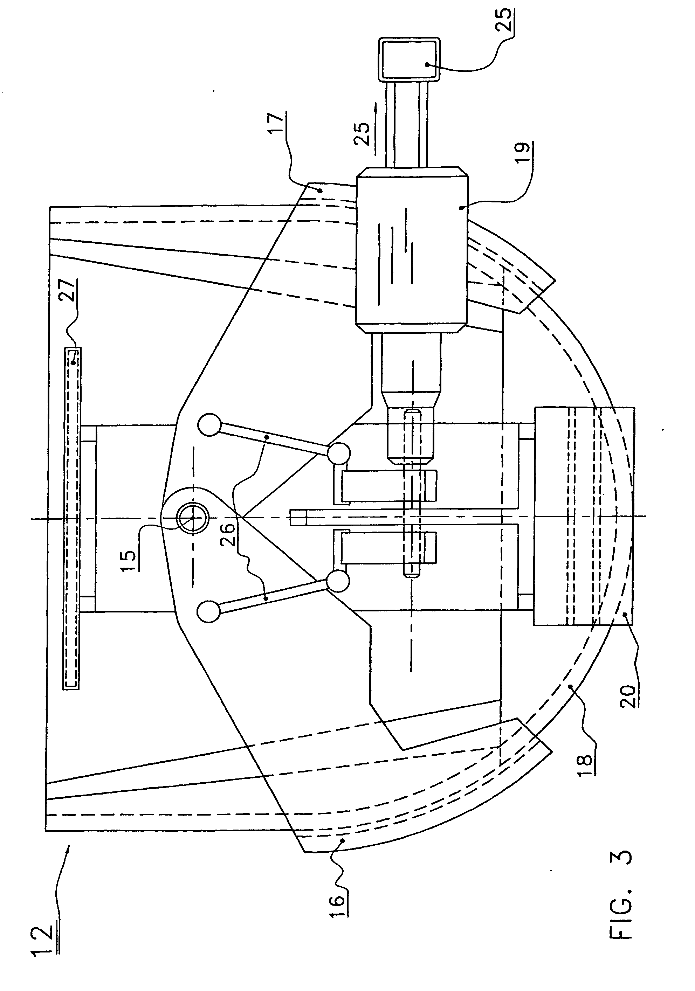

For conveying the feed to the tube-shaped chute 3, 3', the receptacle 12 has a bottom which is adapted to be opened. In the embodiment shown in Figure 3 this is realised in that the bottom of the receptacle 12 is constituted by two halves 16 and 17 which are pivotable about an axis 15. When the halves 16, 17 move away from each other, there is created an aperture 18 through which the feed falls into the tube-shaped chute 3, 3'.

The device comprises a drive member 19 for controlling the opening of the bottom. The drive member 19 is controlled by a computer 25 which also controls the order of functioning of the first and second conveyors 11 respectively 3, 3'.

The receptacle 12 is provided with a weighing device 20 known per se for measuring feed present in the receptacle 12. The weighing device 20 may be a load cell on which the receptacle 12 bears via e.g. a leaf spring 27 and a rod assembly 26.

There are provided identification means 7 for identifying an individual animal. In the embodiment shown the identification means 7 are disposed in the partitions 4, but it will be obvious that the identification means may also be disposed at other places, such as e.g. the feeding troughs 6. With the aid of the identification means 7 the identity of an animal present at a feeding trough 6 is determined automatically. With the aid of correspondence tables stored in the memory of e.g. the computer, it is possible to supply e.g. the amount of feed intended for that animal. Said amount may be determined by means of the weighing device 20. With the aid of data from the animal identification means 7 the computer further controls the movement of the tube-shaped chute 3 so that the latter is located over the right feeding trough 6. The computer further controls the drive of the conveyors 11.

For the purpose of giving animals of different heights access to a feeding trough 6 in a simple manner, the height of a feeding trough 6 relative to the bottom 5 is adjustable. To that end a feeding trough may be disposed on the framework 1 so as to be movable in height, said movement being realised by e.g. a motor controlled by the computer 25. For controlling the motor for moving the feeding troughs in height, the computer 25 may use data from the animal recognition respectively the animal identification means 7.

Alternatively the floor portion 8 of the bottom 5 may be moved upwards or downwards by means of a lifting device 28. A raised floor portion 8, even when it is constituted by a permanently raised floor portion 8, has the advantage that the cow has not to stand unnecessarily in excrement. Especially for that purpose the floor portion 8 slopes downwards in a direction away from the device, as schematically shown in Figure 1.

When the device according to the invention is suitable for feeding calves, or other animals that are growing, it is advantageous when there is provided an animal height measuring means for measuring the height of an animal. Such an animal height measuring means may e.g. be constituted by a camera or a light grid. In Figure 2 there are provided measuring strips 29 (or sensors in the form of strips) which may be used for height measurement, and possibly for the control of the mutual height adjustment of feeding trough and floor portion.

The information from the height measuring means 29 may also be used for controlling a feed metering device supplying feed in metered portions partially with the aid of data from the animal identification device 7 and feeding data stored in the computer 25. In this situation also the information from an animal weighing device, e.g. a floor portion designed as a weighing floor. For that purpose the animal height measuring means and the weighing means comprise a data conveying means for conveying measurement data to the computer. The computer is provided with a memory containing average growth data for the animal species, preferably in the form of correspondence tables, in relation to weight in dependence of age, and/or in relation to height in dependence of age, and/or in relation to the amount of feed per day per animal in dependence of age, and/or historical growth data of an animal, the feed metering device supplying feed in metered portions with the aid of at least one of said data.

According to the invention, in the device as shown in Figures 1 and 2 in which several feeding troughs 6 are disposed around the central axis 2, there are used feeding troughs having a shape that widens from their entrance opening towards the central axis 2. This has enormous, unexpected advantages in relation to the feed intake of animals. In this situation the degree of widening is especially such that the front part of the head of the cow has relatively much lateral freedom, and the entrance opening is just large enough to allow the passage of the head.

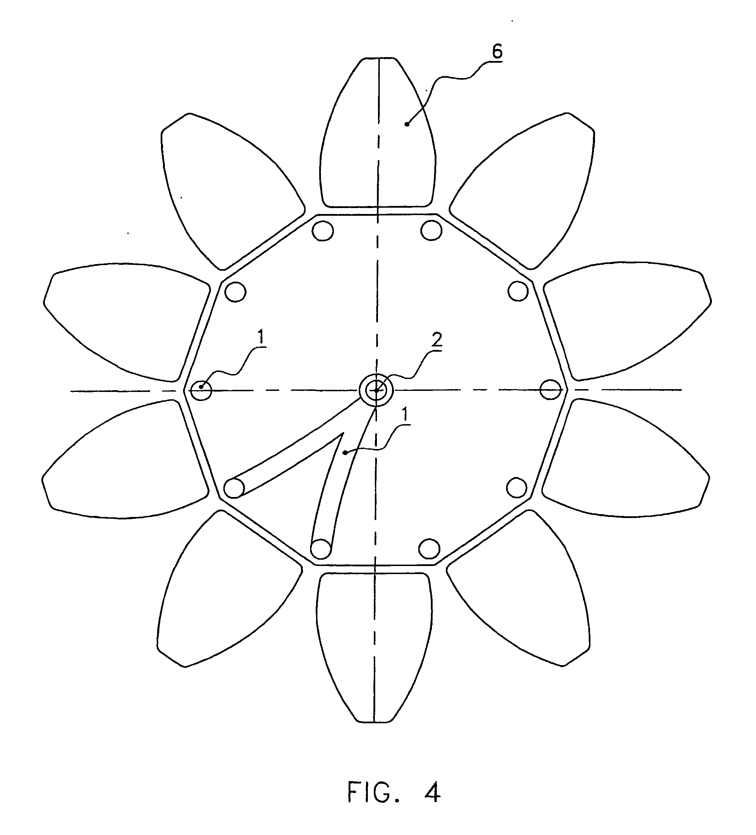

Figure 4 shows schematically a plan view of a plurality of feeding troughs 6 disposed around a central axis 2. The feeding troughs 6 are widening from the entrance side for an animal. The feeding troughs 6 may also be designed so as to be deeper in the region of the widened portion than in the region of the remaining portion. It will be obvious that the invention is not limited to the shape in the embodiment shown, but that all widening shapes may be applied.

The invention is not limited to the above-described embodiments, but it will be obvious that supplements and modifications within the scope of the claims are possible. The device may e.g. be provided with a lighting disposed behind a feeding trough, preferably a central lighting for all feeding troughs. Besides, the device may be provided with means for combating vermin, and/or means for preventing the formation of condensation in the device, and/or means for cooling an animal. Especially when the device is used by dairy animals, it has appeared to be advantageous when the device is provided with means for giving the animal a signal indicating that the animal is expected at a milk box, said milk box comprising for example a milking robot.

## Claims

1. A device for supplying feed to animals, such as cows, said device being provided with a plurality of feeding troughs (6) disposed on a framework (1) which is located around a central axis (2), each feeding trough (6) being accessible to an animal and having an entrance side for the head of an animal, **characterized in that** at least one feeding trough (6) has a shape that widens from the entrance side.

2. A device as claimed in claim 1, **characterized in that** all the feeding troughs (6) have a shape that widens from the entrance side.

3. A device as claimed in claim 1 or 2, **characterized in that** a first number of the feeding troughs (6) are disposed on the framework (1) in a lower position than a second number of the feeding troughs (6).

4. A device as claimed in claim 1, 2 or 3, said device comprising a bottom (5, 8), **characterized in that** a feeding trough (6) is mounted so as to be adjustable in height relative to the bottom (5, 8).

5. A device as claimed in any one of the preceding claims, **characterized in that** the device is provided with identification means (7) for identifying an individual animal.

6. A device as claimed in claims 4 and 5, **characterized in that** the height of the feeding trough (6) is automatically adjustable with the aid of data from the identification means (7).

7. A device as claimed in any one of the preceding claims, **characterized in that** there is disposed a partition (4) between two adjacent feeding troughs (6).

8. A device as claimed in claim 7, **characterized in that** in the partition (4) there is disposed a reading device (13) for a step counter.

9. A device as claimed in any one of the preceding claims, **characterized in that** the device is provided with at least one partition frame (14) extending from a feeding trough (6) over a distance that equals at least approximately half of the average length of an animal.

10. A device as claimed in claim 9, **characterized in that** the partition frame (14) is made of stainless steel.

11. A device as claimed in any one of the preceding claims, **characterized in that** the device is provided with a measuring means (29) for measuring the height and/or the weight of an animal.

12. A device as claimed in claim 11, **characterized in that** the measurement data are stored for determining the growth of an animal and/or for attuning the fodder and/or drink supply.

13. A device as claimed in claims 4 and 11, **characterized in that** the height is adjusted with the aid of data from the measuring means (29).

14. A device as claimed in claim 1 or 2, **characterized in that** the device is provided with a hopper (9, 10) for containing a stock of feed, and with conveying means (3, 3'; 11; 18) for conveying feed from the hopper (9, 10) to the feeding trough (6).

15. A device as claimed in claim 14, **characterized in that** the conveying means comprise a first conveyor (11) for conveying feed upwards from a hopper (9, 10), the first conveyor (11) having a supply end for supplying feed to be conveyed to the feeding trough (6).

16. A device as claimed in claim 15, **characterized in that** the device is provided with a receptacle (12), the first conveyor (11) conveying an amount of feed from the hopper (9, 10) to the receptacle (12).

17. A device as claimed in claim 15 or 16, **characterized in that** the receptacle (12) is provided with a weighing device (20) for measuring feed present in the receptacle (12).

18. A device as claimed in claim 16 or 17, **characterized in that** the receptacle (12) has a bottom (16, 17) which is adapted to be opened.

19. A device as claimed in any one of the preceding claims 14 through 18, **characterized in that** the conveying means comprise a second conveyor (3, 3') for conveying the amount of feed from the receptacle (12) to the feeding trough (6).

20. A device as claimed in any one of the preceding claims 14 through 19, **characterized in that** the device comprises a plurality of hoppers (9, 10), said hoppers (9, 10) being disposed on a framework (1) which is located around a central axis (2).

21. A device as claimed in claim 20, **characterized in that** each hopper (9, 10) has a discharge end (21, 22), a discharge end corresponding with the relevant supply end of the first conveyor (11), and **in that** the discharge ends (21, 22) of the hoppers (9, 10) alternately stagger in height, the arrangement being such that the discharge ends (21, 22) of juxtaposed hoppers (9, 10) partially overlap each other in a projective view.

22. A device as claimed in claim 3, **characterized in that** above at least one of the feeding troughs (6) of the first number there is provided a third conveyor (18) for conveying feed from the second conveyor (3, 3') to the feeding trough (6).

23. A device as claimed in claim 22, **characterized in that** the third conveyor (18) is disposed so as to be rotatable around the central axis (2).

24. A device as claimed in claim 19, **characterized in that** the second conveyor (3, 3') is disposed so as to be rotatable around the central axis (2).

25. A device as claimed in any one of the preceding claims, **characterized in that** the device is provided with means for giving the animal a signal indicating that the animal is expected at a milk box.

26. A device as claimed in any one of the preceding claims, the device comprising a bottom (5, 8), **characterized in that** the bottom (5, 8) slopes downwards in a direction away from the central axis (2).

27. A device as claimed in any one of the preceding claims, the device comprising a bottom (5, 8), **characterized in that** the bottom (5) has a raised portion (8) on which the animal can stand.

28. An assembly of a device as claimed in any one of the preceding claims and a bottom (5) having a floor portion (8) on which an animal can stand for making use of the device, **characterized in that** the floor portion (8) is provided with means (28) for adjusting the orientation of the floor portion (8) relative to the bottom (5), and means for locking the floor portion (8) in an adjusted position.

29. An assembly as claimed in claim 28, **characterized in that** the assembly is provided with identification means (7) for identifying an individual animal, the adjusting means (28) being controlled with the aid of data from the identification means (7).

30. An assembly of a device as claimed in any one of the preceding claims 1 through 27 and a bottom (5) having a floor portion (8) on which an animal can stand for making use of the device, **characterized in that** the floor portion (8) is located above the bottom (5).

31. An assembly of a device as claimed in any one of the preceding claims 1 through 27 and a bottom (5) having a floor portion (8) on which an animal can stand for making use of the device, **characterized in that** the floor portion (8) obliquely slopes downwards away from the central axis (2).

## Patentansprüche

1. Vorrichtung zum Zuführen von Futter zu Tieren, wie z. B. Kühen, wobei die Vorrichtung mit mehreren Futtertrögen (6) versehen ist, die an einem Rahmen (1) angebracht sind, der um eine Mittelachse (2) herum angeordnet ist, wobei jeder Futtertrog (6) für ein Tier zugänglich ist und eine Zugangsseite für den Kopf eines Tieres hat,
**dadurch gekennzeichnet, daß** mindestens ein Futtertrog (6) eine sich von der Zugangsseite aus verbreiternde Form aufweist.

2. Vorrichtung nach Anspruch 1,
**dadurch gekennzeichnet, daß** alle Futtertröge (6) eine sich von der Zugangsseite aus verbreiternde Form aufweisen.

3. Vorrichtung nach Anspruch 1 oder 2,
**dadurch gekennzeichnet, daß** eine erste Anzahl von Futtertrögen (6) an dem Rahmen (1) in einer niedrigeren Position angeordnet ist als eine zweite Anzahl von Futtertrögen (6).

4. Vorrichtung nach Anspruch 1, 2 oder 3, wobei die Vorrichtung einen Boden (5, 8) umfaßt,
**dadurch gekennzeichnet, daß** ein Futtertrog (6) derart angeordnet ist, daß er relativ zu dem Boden (5, 8) höhenverstellbar ist.

5. Vorrichtung nach einem der vorhergehenden Ansprüche,
**dadurch gekennzeichnet, daß** die Vorrichtung mit einer Identifikationsvorrichtung (7) zum Identifizieren eines einzelnen Tieres versehen ist.

6. Vorrichtung nach den Ansprüchen 4 und 5,
**dadurch gekennzeichnet, daß** die Höhe des Futtertroges (6) mit Hilfe von Daten der Identifikationsvorrichtung (7) automatisch einstellbar ist.

7. Vorrichtung nach einem der vorhergehenden Ansprüche,
**dadurch gekennzeichnet, daß** zwischen zwei benachbarten Futtertrögen (6) eine Trennwand (4) angeordnet ist.

8. Vorrichtung nach Anspruch 7,
**dadurch gekennzeichnet, daß** in der Trennwand (4) eine Lesevorrichtung (13) für einen Schrittzähler angeordnet ist.

9. Vorrichtung nach einem der vorhergehenden Ansprüche,
**dadurch gekennzeichnet, daß** die Vorrichtung mit mindestens einem Trennrahmen (14) versehen ist, der sich von einem Futtertrog (6) über eine Distanz erstreckt, die zumindest annähernd gleich der halben durchschnittlichen Länge eines Tieres ist.

10. Vorrichtung nach Anspruch 9,
**dadurch gekennzeichnet, daß** der Trennrahmen (14) aus rostfreiem Stahl hergestellt ist.

11. Vorrichtung nach einem der vorhergehenden Ansprüche,
**dadurch gekennzeichnet, daß** die Vorrichtung mit einer Meßvorrichtung (29) zum Messen der Höhe und/oder des Gewichts eines Tieres versehen ist.

12. Vorrichtung nach Anspruch 11,
**dadurch gekennzeichnet, daß** die Meßdaten gespeichert werden, um das Wachstum eines Tieres zu ermitteln und/oder die Zufuhr von Futter und/oder Trinkflüssigkeit abzustimmen.

13. Vorrichtung nach den Ansprüchen 4 und 11,
**dadurch gekennzeichnet, daß** die Höhe mit Hilfe von Daten der Meßvorrichtung (29) eingestellt wird.

14. Vorrichtung nach Anspruch 1 oder 2,
**dadurch gekennzeichnet, daß** die Vorrichtung mit einem Vorratsbehälter (9, 10) zur Aufnahme eines Futtervorrates sowie mit einer Beförderungsvorrichtung (3, 3'; 11; 18) zum Befördern von Futter aus dem Vorratsbehälter (9, 10) zu dem Futtertrog (6) versehen ist.

15. Vorrichtung nach Anspruch 14,
**dadurch gekennzeichnet, daß** die Beförderungsvorrichtung einen ersten Förderer (11) zum Befördern von Futter aus einem Vorratsbehälter (9, 10) nach oben umfaßt, wobei der erste Förderer (11) ein Zuführende zum Zuführen von Futter aufweist, das zum Futtertrog (6) zu befördern ist.

16. Vorrichtung nach Anspruch 15,
**dadurch gekennzeichnet, daß** die Vorrichtung mit einem Behälter (12) versehen ist, wobei der erste Förderer (11) eine Futtermenge von dem Vorratsbehälter (9, 10) zu dem Behälter (12) befördert.

17. Vorrichtung nach Anspruch 15 oder 16,
**dadurch gekennzeichnet, daß** der Behälter (12) mit einer Wiegevorrichtung (20) zum Messen von in dem Behälter (12) befindlichem Futter versehen ist.

18. Vorrichtung nach Anspruch 16 oder 17,
**dadurch gekennzeichnet, daß** der Behälter (12) einen Boden (16, 17) hat, der geöffnet werden kann.

19. Vorrichtung nach einem der vorhergehenden Ansprüche 14 bis 18,
**dadurch gekennzeichnet, daß** die Beförderungsvorrichtung einen zweiten Förderer (3, 3') umfaßt, um die Futtermenge von dem Behälter (12) zu dem Futtertrog (6) zu befördern.

20. Vorrichtung nach einem der vorhergehenden Ansprüche 14 bis 19,
**dadurch gekennzeichnet, daß** die Vorrichtung mehrere Vorratsbehälter (9, 10) umfaßt, wobei die Vorratsbehälter (9, 10) an einem Rahmen (1) angebracht sind, der um eine Mittelachse (2) herum angeordnet ist.

21. Vorrichtung nach Anspruch 20,
**dadurch gekennzeichnet, daß** jeder Vorratsbehälter (9, 10) ein Auslaßende (21, 22) aufweist, wobei ein Auslaßende dem jeweiligen Zuführende des ersten Förderers (11) entspricht, und daß die Auslaßenden (21, 22) der Vorratsbehälter (9, 10) abwechselnd höhenversetzt zueinander angeordnet sind, wobei die Anordnung so getroffen ist, daß sich die Auslaßenden (21, 22) von nebeneinander angeordneten Vorratsbehältern (9, 10) in projektiver Ansicht teilweise überlappen.

22. Vorrichtung nach Anspruch 3,
**dadurch gekennzeichnet, daß** über mindestens einem der Futtertröge (6) der ersten Anzahl ein dritter Förderer (18) angeordnet ist, um Futter von dem zweiten Förderer (3, 3') zu dem Futtertrog (6) zu befördern.

23. Vorrichtung nach Anspruch 22,
**dadurch gekennzeichnet, daß** der dritte Förderer (18) derart angeordnet ist, daß er um die Mittelachse (2) drehbar ist.

24. Vorrichtung nach Anspruch 19,
**dadurch gekennzeichnet, daß** der zweite Förderer (3, 3') derart angeordnet ist, daß er um die Mittelachse (2) drehbar ist.

25. Vorrichtung nach einem der vorhergehenden Ansprüche,
**dadurch gekennzeichnet, daß** die Vorrichtung mit einer Vorrichtung versehen ist, um dem Tier ein Signal zu geben, das anzeigt, daß das Tier in einer Melkbox erwartet wird.

26. Vorrichtung nach einem der vorhergehenden Ansprüche, wobei die Vorrichtung einen Boden (5, 8) umfaßt,
**dadurch gekennzeichnet, daß** der Boden (5, 8) in von der Mittelachse (2) abgewandter Richtung schräg nach unten geneigt ist.

27. Vorrichtung nach einem der vorhergehenden Ansprüche, wobei die Vorrichtung einen Boden (5, 8) umfaßt,
**dadurch gekennzeichnet, daß** der Boden (5) einen erhöhten Teil (8) aufweist, auf dem das Tier stehen kann.

28. Anordnung aus einer Vorrichtung nach einem der vorhergehenden Ansprüche und einem Boden (5) mit einem Bodenteil (8), auf dem ein Tier stehen kann, um die Vorrichtung zu benutzen,
**dadurch gekennzeichnet, daß** der Bodenteil (8) mit einer Vorrichtung (28) zum Einstellen der Ausrichtung des Bodenteiles (8) relativ zu dem Boden (5) und mit einer Vorrichtung zum Verriegeln des Bodenteiles (8) in einer eingestellten Position versehen ist.

29. Anordnung nach Anspruch 28,
**dadurch gekennzeichnet, daß** die Anordnung mit einer Identifikationsvorrichtung (7) zum Identifizieren eines einzelnen Tieres versehen ist, wobei die Einstellvorrichtung (28) mit Hilfe von Daten der Identifikationsvorrichtung (7) gesteuert wird.

30. Anordnung aus einer Vorrichtung nach einem der vorhergehenden Ansprüche 1 bis 27 und einem Boden (5) mit einem Bodenteil (8), auf dem ein Tier stehen kann, um die Vorrichtung zu benutzen,
**dadurch gekennzeichnet, daß** der Bodenteil (8) über dem Boden (5) angeordnet ist.

31. Anordnung aus einer Vorrichtung nach einem der vorhergehenden Ansprüche 1 bis 27 und einem Boden (5) mit einem Bodenteil (8), auf dem ein Tier stehen kann, um die Vorrichtung zu benutzen,
**dadurch gekennzeichnet, daß** der Bodenteil (8) in von der Mittelachse (2) abgewandter Richtung schräg nach unten geneigt ist.

## Revendications

1. Dispositif pour la distribution de nourriture aux animaux, tels que des vaches, ledit dispositif étant pourvu de plusieurs auges de distribution (6) disposées sur un châssis (1) qui est lui-même placé autour d'un axe central (2), chaque auge de distribution (6) étant accessible à un animal et présentant une face d'accès destinée à l'entrée de la tête d'un animal, **caractérisé en ce qu'**au moins une auge (6) présente une forme qui s'élargit à partir de la face d'accès.

2. Dispositif selon la revendication 1, **caractérisé en ce que** toutes les auges de distribution (6) présentent une forme qui s'élargit à partir de la face d'accès.

3. Dispositif selon la revendication 1 ou 2, **caractérisé en ce qu'**un premier lot d'auges de distribution (6) est disposé autour d'un châssis (1) dans une position inférieure à celle d'un second lot d'auges de distribution (6).

4. Dispositif selon la revendication 1, 2 ou 3, ledit dispositif comprenant un socle (5, 8), **caractérisé en ce qu'**une auge de distribution (6) est montée de manière à être ajustable en hauteur par rapport au socle (5, 8).

5. Dispositif selon l'une quelconque des revendications précédentes, **caractérisé en ce que** le dispositif est pourvu de moyens d'identification (7) servant à identifier un animal isolé.

6. Dispositif selon les revendications 4 et 5, **caractérisé en ce que** la hauteur des auges de distribution (6) s'ajuste automatiquement grâce aux informations obtenues des moyens d'identification (7).

7. Dispositif selon l'une quelconque des revendications précédentes, **caractérisé en ce qu'**une séparation (4) est présente entre deux auges de distribution adjacentes (6).

8. Dispositif selon la revendication 7, **caractérisé en ce qu'**au sein de la séparation (4), il présente un dispositif d'affichage (13) pour un compteur de pas.

9. Dispositif selon l'une quelconque des revendications précédentes, **caractérisé en ce que** le dispositif est pourvu d'au moins une structure de séparation (14) s'étendant d'une auge de distribution (6) sur une distance qui équivaut approximativement à au moins la moitié de la longueur moyenne d'un animal.

10. Dispositif selon la revendication 9, **caractérisé en ce que** la structure de séparation (14) est en acier inoxydable.

11. Dispositif selon l'une quelconque des revendications précédentes, **caractérisé en ce que** le dispositif comprend des moyens de mesure (29) destinés à mesurer la hauteur et/ou le poids d'un animal.

12. Dispositif selon la revendication 11, **caractérisé en ce que** les informations de mesure sont enregistrées dans le but de déterminer la croissance d'un animal et/ou d'adapter l'alimentation en fourrage et/ou en eau.

13. Dispositif selon les revendications 4 et 11, **caractérisé en ce que** la hauteur est ajustée grâce aux informations transmises par les moyens de mesure (29).

14. Dispositif selon la revendication 1 ou 2, **caractérisé en ce que** le dispositif est pourvu d'une trémie à aliments (9, 10) destinée à contenir un stock de nourriture et pourvu de moyens de transport (3, 3'; 11; 18) destinés à transporter la nourriture depuis la trémie à aliments (9, 10) jusqu'à l'auge de distribution (6).

15. Dispositif selon la revendication 14, **caractérisé en ce que** les moyens de transport comprennent une première unité de transport (11) pour transporter la nourriture vers le haut à partir de la trémie à aliments (9, 10), la première unité de transport (11) présentant une sortie pour distribuer la nourriture devant être amenée jusqu'à l'auge de distribution (6).

16. Dispositif selon la revendication 15, **caractérisé en ce que** le dispositif est doté d'un réceptacle (12), la première unité de transport (11) transportant une ration de nourriture depuis la trémie à aliments (9, 10) jusqu'au réceptacle (12).

17. Dispositif selon la revendication 15 ou 16, **caractérisé en ce que** le réceptacle (12) est doté d'un dispositif de pesage (20) pour mesurer la quantité de nourriture présente dans le réceptacle (12).

18. Dispositif selon la revendication 16 ou 17, **caractérisé en ce que** le réceptacle (12) présente un fond (16, 17) conçu pour être ouvert.

19. Dispositif selon l'une quelconque des précédentes revendications 14 à 18, **caractérisé en ce que** les moyens de transport de la nourriture comprennent une deuxième unité de transport (3, 3') pour transporter la quantité de nourriture du réceptacle (12) à l'auge de distribution (6).

20. Dispositif selon l'une quelconque des précédentes revendications 14 à 19, **caractérisé en ce que** le dispositif comprend plusieurs trémies à aliments (9, 10), lesdites trémies à aliments (9, 10) étant disposées sur un châssis (1) qui repose sur un axe central (2).

21. Dispositif selon la revendication 20, **caractérisé en ce que** chaque trémie à aliments (9, 10) présente une goulotte de déchargement (21, 22), une goulotte de déchargement correspondant à la sortie appropriée de la première unité de transport (11), et **en ce que** les goulottes de déchargement (21, 22) des trémies à aliments (9, 10) se décalent à tour de rôle en hauteur, la disposition étant telle que les goulottes de déchargement (21, 22) des trémies à aliments juxtaposées (9, 10) se chevauchent en partie les unes les autres selon une vue en projection.

22. Dispositif selon la revendication 3, **caractérisé en ce qu'**au-dessus d'au moins une des auges de distribution (6) du premier lot on trouve une troisième unité de transport (18) pour transporter la nourriture depuis la deuxième unité de transport (3, 3') jusqu'à l'auge de distribution de nourriture (6).

23. Dispositif selon la revendication 22, **caractérisé en ce que** la troisième unité de transport (18) est disposée de manière à être en rotation autour de l'axe central (2).

24. Dispositif selon la revendication 19, **caractérisé en ce que** la deuxième unité de transport (3, 3') est disposée de manière à être en rotation autour de l'axe central (2).

25. Dispositif selon l'une quelconque des précédentes revendications, **caractérisé en ce que** le dispositif est équipé de moyens permettant d'émettre un signal à l'attention de l'animal indiquant que l'animal est attendu dans une salle de traite.

26. Dispositif selon l'une quelconque des précédentes revendications, le dispositif comprenant un socle (5, 8), **caractérisé en ce que** le socle (5, 8) s'incline vers le bas dans une direction éloignée de l'axe central (2).

27. Dispositif selon l'une quelconque des précédentes revendications, le dispositif comprenant un socle (5, 8), **caractérisé en ce que** le socle (5) présente une partie surélevée (8) sur lequel l'animal peut se tenir debout.

28. Assemblage d'un dispositif selon l'une quelconque des revendications précédentes et d'un socle (5) présentant un plateau (8) sur lequel un animal peut se tenir debout pour utiliser le dispositif, **caractérisé en ce que** le plateau (8) est doté de moyens (28) permettant d'ajuster l'orientation du plateau (8) par rapport au socle (5), et de moyens permettant de verrouiller le plateau (8) dans une position adaptée.

29. Assemblage selon la revendication 28, **caractérisé en ce que** l'assemblage est doté de moyens d'identification (7) pour identifier un animal isolé, les moyens d'ajustement (28) étant contrôlés grâce aux informations obtenues des moyens d'identification (7).

30. Assemblage d'un dispositif selon l'une quelconque des précédentes revendications 1 à 27 et d'un socle (5) présentant un plateau (8) sur lequel un animal peut se tenir debout pour utiliser le dispositif, **caractérisé en ce que** le plateau (8) est situé au-dessus du socle (5).

31. Assemblage d'un dispositif selon l'une quelconque des précédentes revendications 1 à 27 et d'un socle (5) présentant un plateau (8) sur lequel un animal peut se tenir debout pour utiliser le dispositif, **caractérisé en ce que** le plateau (8) s'incline vers le bas de manière oblique en s'éloignant de l'axe central (2).
